# DEMANDE DE BREVET EUROPEEN

(11) **EP 1 284 218 A1**
(43) Date de publication de la demande: **19.02.2003**
(21) Numéro de dépôt: 02016197.2
(22) Date de dépôt: 22.07.2002
(51) Int. Cl.: B60R 9/055

(54) **Dispositif et système d'attache pour la fixation d'un coffre de toit pour véhicules automobiles**

(30) Priorité: 13.08.2001 FR 0110760
(71) Demandeur: Siepa France S.A., 06510 Le Broc (FR)
(72) Inventeur: Lallement, Olivier, C/O Cabinet Hautier, 24 rue Masséna, 06000 NICE (FR)
(74) Mandataire: Hautier, Jean-Louis

(57) **Abrégé**

Dispositif et système d'attache utilisable pour la fixation d'un objet (1) tel un coffre de toit sur une barre (4) de toit d'un véhicule automobile.

Le dispositif comprend une base (6) et un étrier (7) encadrant la barre (4) et une partie de l'objet (1) pour assurer leur serrage.

L'étrier comporte une partie horizontale solidaire à l'une de ses extrémités d'une partie verticale en liaison avec la base (6).

Application à la fixation d'accessoires pour véhicules automobiles par des barres de toit.

## Description

La présente invention concerne un dispositif et un système d'attache utilisable pour la fixation d'un objet sur une barre de toit d'un véhicule automobile.

L'invention trouvera particulièrement son application pour la fixation de coffres de toit sur des barres.

On connaît actuellement déjà des systèmes à étrier pour la fixation de coffres de toit sur des barres.

Un étrier en forme de U est passé autour de la barre de toit et s'insère au travers de l'objet à fixer par des trous afin de coopérer avec un organe d'appui situé à l'intérieur du volume du coffre de toit et recevant les extrémités du U formé par l'étrier.

*Dans ce cadre, on connaît plus précisément du document EP-A-754.595 un dispositif destiné à l'attache rapide d'un coffre de toit sur des barres transversales fixées sur un toit de véhicule.*

*Ce dispositif comprend des étriers de traction en forme de U traversant le fond du coffre de toit et pouvant être serrés vers le haut.*

*Ce dispositif comprend en outre des moyens spécifiques pour le serrage rapide de l'étrier sur la barre de toit.*

*Ces moyens utilisent notamment un levier de serrage qui peut pivoter pour assurer le rapprochement de l'étrier en U et de l'organe d'appui correspondant positionné à l'intérieur du coffre de toit.*

La fixation par de tels dispositifs s'avère efficace.

Cependant, cette technique présente de nombreux inconvénients sur le plan pratique et particulièrement lors du montage et du démontage.

En particulier, l'utilisateur a la nécessité de passer une main sous le coffre de toit pour placer l'étrier en U autour de la barre de toit tout en gardant l'autre main à l'intérieur du volume du coffre pour maintenir l'organe d'appui.

Cette situation s'avère peu pratique et n'évite pas tous risques de rayures au niveau du toit du véhicule.

Un autre inconvénient du dispositif connu est qu'il ne permet pas de s'adapter facilement à la position longitudinale des barres transversales de fixation sur le toit.

En effet, les dispositifs connus coopèrent avec une pluralité de trous réalisée dans le fond du coffre de toit mais qui n'offre que quelques positions différentes de montage des dispositifs d'attache.

On ne peut donc régler de façon précise et facile la position du dispositif d'attache par rapport au coffre de toit et ce, selon la position longitudinale des barres de toit.

En outre, les systèmes à étrier connus jusqu'à présent sont composés de multiples organes distincts qui ne suppriment pas toute perte de pièces par l'utilisateur et augmentent d'autant le coût de fabrication.

L'invention permet de remédier à ces inconvénients et présente pour ce faire un dispositif et un système d'attache perfectionnés.

Un but de l'invention est de rendre plus pratique le montage des étriers sous les barres de toit pour l'attache de l'objet.

Pour réaliser ce montage de l'étrier, l'invention ne nécessite pas d'intervention de l'utilisateur sous le coffre de toit au niveau des barres.

Elle permet par ailleurs un réglage précis et facile de la position longitudinale de l'étrier.

Dans un mode préféré de réalisation, le dispositif selon l'invention a également l'avantage d'être constitué d'un ensemble unitaire évitant tout risque de perte de pièces et augmentant d'autant la facilité d'utilisation.

D'autres buts et avantages apparaîtront au cours de la description qui suit qui présent un mode particulier de réalisation de l'invention non limitatif.

La présente invention concerne un dispositif d'attache utilisable pour la fixation d'un objet sur une barre de toit d'un véhicule automobile, comportant une base et un étrier encadrant la barre et une partie de l'objet et aptes à être rapprochés pour le serrage de l'objet sur la barre, caractérisé par le fait que l'étrier comporte une partie horizontale solidaire, à l'une de ses extrémités, d'une partie verticale en liaison avec la base.

Ce dispositif peut se présenter selon les variantes introduites ci-après :
- la partie verticale comporte un coude intermédiaire entre une zone verticale solidaire de la partie horizontale et une zone verticale en liaison avec la base.
- la zone verticale en liaison avec la base est centrée sur la zone d'appui de la partie horizontale sur la barre.
- l'autre extrémité de la partie horizontale comporte un retour vers l'intérieur de l'étrier.
- il comporte des moyens de blocage en rotation de l'étrier 7 par rapport à la base.
- la base comporte une cavité de logement du coude de l'étrier.
- la base comporte un trou débouchant au travers duquel passe l'extrémité de la partie verticale de l'étrier
- il comporte des moyens de serrage au niveau de l'extrémité de la partie verticale de l'étrier.
- les moyens de serrage sont constitués :
   - d'une portion filetée à l'extrémité de la partie verticale de l'étrier
   - d'un écrou de serrage.
- l'écrou est monté en liaison pivot sur la base.

L'invention concerne également un système d'attache utilisable pour la fixation d'un objet sur une barre de toit d'un véhicule automobile, comportant une base et un étrier encadrant la barre et une partie de l'objet et aptes à être rapprochés pour le serrage de l'objet sur la barre, caractérisé par le fait qu'il comporte :
- un dispositif selon l'invention
- un trou oblong formé, dans la direction transversale à la barre sur la partie de l'objet à serrer sur la barre.

Ce système peut se présenter suivant les modes de réalisation préférés suivants :
- il comporte des moyens de blocage en rotation de la base 6 par rapport à l'objet à serrer
- il comporte au moins une nervure jouxtant la base pour la bloquer en rotation.
- le dispositif d'attache comporte au moins deux butées faisant saillie sur le flanc de la base jouxtant la nervure.

Les dessins ci-joints sont donnés à titre d'exemples et ne sont pas limitatifs de l'invention. Ils représentent seulement un mode de réalisation de l'invention et permettront de la comprendre aisément.

La figure 1 est une vue éclatée des différents composants de l'invention dans un mode de réalisation.

La figure 2 est une vue en coupe longitudinale du dispositif d'attache ici présenté.

La figure 3 illustre en vue de côté le système d'attache selon l'invention et le dispositif d'attache.

La figure 4 est une perspective de l'étrier dans un mode préféré de réalisation de l'invention.

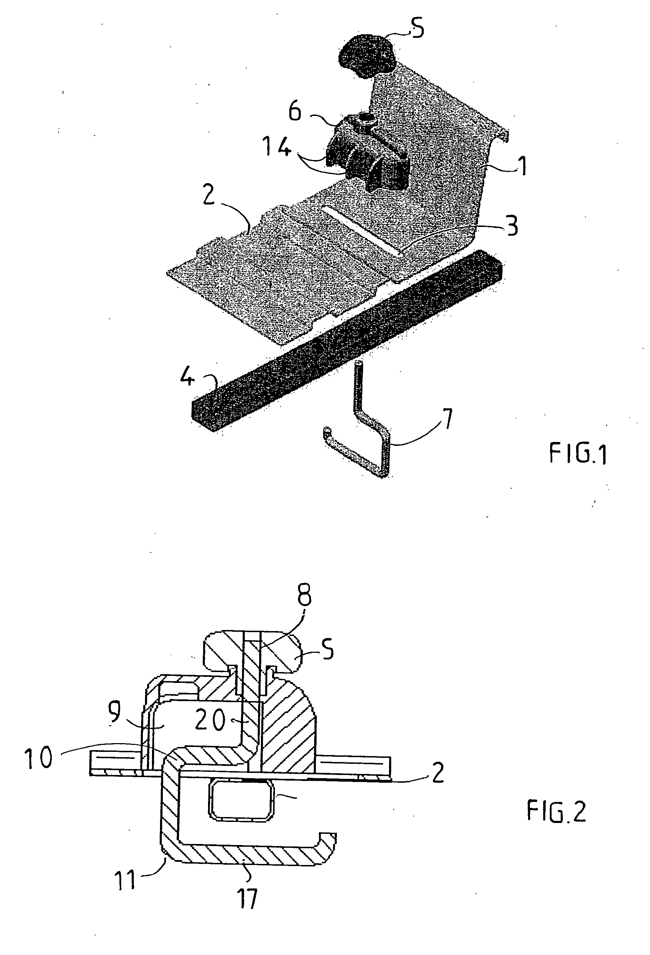

La figure 1 illustre partiellement un coffre de toit pouvant constituer l'objet 1 à fixer.

Ce coffre comprend un fond 2 pouvant être muni d'une multiplicité de nervures 13 servant généralement à sa rigidification.

Les nervures 13 sont habituellement orientées dans le sens long de la voiture c'est-à-dire transversalement à l'orientation des barres 4 servant de support.

La figure 1 illustre également partiellement une barre 4 qui peut être d'un type classique pour l'application de la présente invention.

La barre 4 est maintenue à ses deux extrémités par des systèmes de fixation particuliers sur les bords du toit du véhicule.

Tel que représenté aux figures 1 à 4, le dispositif selon l'invention a la particularité de présenter un étrier 7 de configuration spécifique.

Plus précisément, l'étrier 7 n'est pas en forme de U tel que connu jusqu'à présent mais ne comprend qu'une partie verticale 18 solidaire de la partie horizontale 17.

De cette façon, il est possible d'introduire la barre 4 dans le volume intérieur de l'étrier 7 sans nécessité de désolidariser l'étrier 7 du reste du dispositif.

L'insertion peut en particulier être réalisée par simple translation du dispositif jusqu'à ce que l'étrier 7 parvienne autour de la barre 4.

Dans la variante illustrée aux figures, la partie verticale 18 présente un coude intermédiaire 16 définissant deux zones verticales 19, 20 autour du coude 16 réalisant une variation de positionnement latéral des zones verticales 19, 20.

Les variations d'orientation des différentes parties 17 et 18 sont assurées par des virages notamment illustrés en figure 2 sous les repères 10, 11 et 15.

L'ensemble de l'étrier (7) est avantageusement fabriqué par pliage d'une barre d'acier.

De façon préférée, la longueur du coude 16 est telle que la zone verticale 20 de la partie verticale 18 est sensiblement au milieu de la zone d'appui de la partie horizontale 17 sur la barre 4.

Cette configuration est clairement révélée à la figure 2.

De cette façon, l'effort appliqué par l'étrier 7 sur la barre 4 et par la base 6 sur l'étrier 7 sont sensiblement suivant la même porteuse verticale.

L'extrémité libre de la partie horizontale 17 peut comprendre un retour 12 faisant saillie vers l'intérieur de l'étrier 7 et évitant tout retrait intempestif de la barre 4 en dehors du volume intérieur de l'étrier 7.

Dans le volume intérieur du coffre de toit, (sur la partie de l'objet 1 à serrer), se situe une base 6 coopérant avec l'étrier 7.

Comme montré en figure 1, la base 6 peut être une pièce en plastique moulé présentant une surface d'application suffisante sur l'objet 1 pour le serrer efficacement.

La base 6 et l'étrier 7 coopèrent par des moyens de serrage assurant leur liaison tout en permettant un réglage de leur écartement afin d'assurer le serrage et le déserrage de l'objet 1 et de la barre 4.

Dans le cas figuré aux planches de dessins, les moyens de serrage sont constitués par un écrou 5 coopérant avec une partie fileté 8 à l'extrémité libre de la partie verticale 18 de l'étrier 7, ladite extrémité 8 passant au travers d'un trou débouchant formé dans la base 6.

Lors du vissage de l'écrou 5 sur la partie filetée 8, on assure la translation verticale de l'étrier 7 et par conséquent son rapprochement de la surface d'appui sur la barre 4.

Préférentiellement, un système de blocage en translation est prévu entre l'écrou 5 et la face supérieure de la base 6 pour arrêter l'écrou 5 en translation.

On réalise ainsi une liaison pivot de l'écrou 5 sur la base 6 évitant la désunion de l'ensemble lors du montage et du démontage.

Dans le cas illustré où l'étrier 7 comprend un coude intermédiaire 16, la base 6 comporte une cavité permettant le déplacement du coude 16 à l'intérieur de la base.

Qui plus est, en outre, les flancs de la cavité 9 constituent des butées en rotation pour l'étrier 7 ce qui évite son pivot intempestif lors des opérations de serrage et de déserrage par l'écrou 5.

D'autres moyens de blocage en rotation sont possibles tels qu'un ergot sur la zone verticale 20 de l'étrier 7 coulissant dans une rainure formée dans la base 6.

On pourra également prévoir d'autres moyens de serrage et notamment un système à levier positionnable contre la base ou en position relevée pour assurer le déplacement de l'étrier.

On peut notamment se référer au document EP-A-0.754.595 pour ce type de réalisation.

La formation de nervures 13 sur le fond 2 de l'objet 1 est avantageuse en ce qu'elle permet de faire coopérer l'un des flancs de la base 6 avec le relief formé par les nervures 13.

Ainsi, par un choix approprié de dimensions et de positionnement, les nervures 13 constituent une surface de butée pour le flanc de la base 6 le jouxtant.

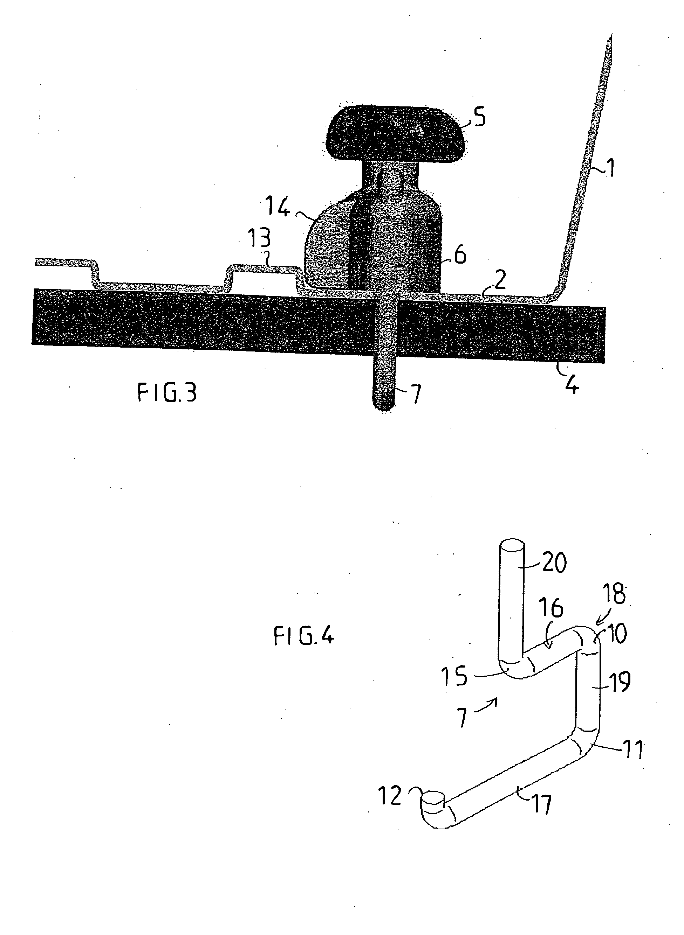

Dans le mode de réalisation illustré et particulièrement visible aux figures 1 et 3, des butées 14 font saillie au-delà du flanc en question pour réaliser les butées.

Deux ou trois butées 14 peuvent être formées à ce niveau.

D'autres moyens de blocage sont possibles entre la base 6 et le fond 2 tels qu'une pièce rapportée sur le fond 2 en forme de rail.

Il est également avantageux de constituer un fond 2 présentant un trou oblong 3 de passage de l'étrier 7.

Le trou oblong 3 est orienté transversalement aux barres 4 et permet le réglage en position longitudinale du dispositif d'attache. Il peut aussi coopérer avec des doigts sur la face inférieure de la base 6 pour constituer les moyens de blocage en rotation.

Les opérations de montage et de démontage du dispositif s'effectuent de façon très pratique.

Le dispositif d'attache est positionné au travers du coffre de toit et peut même y rester à demeure sans aucun démontage ultérieur.

On effectue un déserrage suffisant pour permettre l'insertion de la barre 4 de toit dans le volume intérieur de l'étrier 7.

Cette insertion est effectuée par déplacement longitudinal du dispositif d'attache depuis l'intérieur du coffre de toit, par manipulation de la base 6.

Lorsque le dispositif est en bonne position, l'utilisateur peut procéder au serrage.

Il lui suffit d'actionner les moyens de serrage par exemple un écrou 5 qu'il s'agit de visser.

Une seule main lui suffit pour assurer cette opération compte tenu qu'il n'a pas la nécessité de tenir l'étrier 7 par l'autre face de l'objet 1 et également compte tenu du fait que l'étrier 7 et la base 6 n'ont pas tendance à tourner lors du serrage.

La forme coudée de l'étrier 7 est avantageuse en ce qu'elle assure une bonne reprise d'effort et une limitation des sollicitations en flexion appliquées à l'étrier 7 qui pourraient le déformer.

Le démontage s'effectue en effectuant les opérations inverses en partant du déserrage de l'écrou 5.

Lorsque celui-ci est suffisamment déserré, l'étrier 7 peut être désengagé de la barre 4 et le coffre de toit peut être retiré.

Bien entendu, les dispositifs et systèmes ici présentés sont utilisables en plusieurs exemplaires pour la fixation d'un objet sur une ou plusieurs barres de toit.

Dans la pratique, pour la fixation d'un coffre de toit, deux barres de toit 4 sont généralement utilisées et nécessiteront l'utilisation de quatre dispositifs d'attache.

### REFERENCES

- 1.: Objet
- 2.: Fond
- 3.: Trou oblong
- 4.: Barre
- 5.: Ecrou
- 6.: Base
- 7.: Etrier
- 8.: Partie filetée
- 9.: Cavité
- 10.: Virage
- 11.: Virage
- 12.: Retour
- 13.: Nervure
- 14.: Butée
- 15.: Virage
- 16.: Coude
- 17.: Partie horizontale
- 18.: Partie verticale
- 19.: Zone verticale
- 20.: Zone verticale

## Revendications

1. Dispositif d'attache, utilisable pour la fixation d'un objet (1) sur une barre (4) de toit d'un véhicule automobile, comportant une base (6) et un étrier (7) encadrant la barre (4) et une partie de l'objet (1) et aptes à être rapprochés pour le serrage de l'objet (1) sur la barre (4), **caractérisé par le fait**
**que** l'étrier (7) comporte une partie horizontale (17) solidaire, à l'une de ses extrémités, d'une partie verticale (18) en liaison avec la base (6) et que son autre extrémité est libre.

2. Dispositif selon la revendication 1, **caractérisé par le fait**
**que** la partie verticale (18) comporte un coude (16) intermédiaire entre une zone verticale (19) solidaire de la partie horizontale (17) et une zone verticale (20) en liaison avec la base (6).

3. Dispositif selon la revendication 2, **caractérisé par le fait**
**que** la zone verticale (20) en liaison avec la base (6) est centrée sur la zone d'appui de la partie horizontale (17) sur la barre (4).

4. Dispositif selon l'une quelconque des revendications 1 à 3, **caractérisé par le fait**
**que** l'autre extrémité de la partie horizontale (17) comporte un retour (12) vers l'intérieur de l'étrier (7).

5. Dispositif selon l'une quelconque des revendications 1 à 4 **caractérisé par le fait**
**qu'**il comporte des moyens de blocage en rotation de l'étrier (7) par rapport à la base (6).

6. Dispositif selon la revendication 2 seule ou en combinaison avec l'une quelconque des revendications 3, 4 ou 5 **caractérisé par le fait**
**que** la base (6) comporte une cavité (9) de logement du coude (16) de l'étrier (7).

7. Dispositif selon l'une quelconque des revendications 1 à 6, **caractérisé par le fait que**
- la base (6) comporte un trou débouchant au travers duquel passe l'extrémité de la partie verticale (18) de l'étrier (7)
- il comporte des moyens de serrage au niveau de l'extrémité de la partie verticale (18) de l'étrier (7).

8. Dispositif selon la revendication 7, **caractérisé par le fait**
**que** les moyens de serrage sont constitués :
- d'une portion filetée à l'extrémité de la partie verticale (18) de l'étrier (7)
- d'un écrou (5) de serrage.

9. Dispositif selon la revendication 8 **caractérisé par le fait**
**que** l'écrou (5) est monté en liaison pivot sur la base (6).

10. Système d'attache, utilisable pour la fixation d'un objet (1) sur une barre (4) de toit d'un véhicule automobile, comportant une base (6) et un étrier (7) encadrant la barre (4) et une partie de l'objet (1) et aptes à être rapprochés pour le serrage de l'objet (1) sur la barre (4), **caractérisé par le fait**
**qu'**il comporte :
- un dispositif selon l'une quelconque des revendications 1 à 9
- un trou oblong (3) formé, dans la direction transversale à la barre (4) sur la partie de l'objet (1) à serrer sur la barre (4).

11. Système selon la revendication 10 **caractérisé par le fait**
**qu'**il comporte des moyens de blocage en rotation de la base (6) par rapport à l'objet à serrer.

12. Système selon la revendication 11, **caractérisé par le fait**
**que** les moyens de blocage comportent au moins une nervure (13) jouxtant la base (6).

13. Système selon la revendication 12, **caractérisé par le fait**
**que** le dispositif d'attache comporte au moins deux butées (14) faisant saillie sur le flanc de la base (6) jouxtant la nervure (13).
